# EUROPEAN PATENT APPLICATION

(11) **EP 2 975 301 A1**
(43) Date of publication of application: **20.01.2016**
(21) Application number: 13877918.6
(22) Date of filing: 27.12.2013
(51) Int. Cl.: F16H 61/02

(54) **AUTOMATIC TRANSMISSION CONTROL DEVICE**

(30) Priority: 13.03.2013 JP 2013050716
(71) Applicant: Nissan Motor Co., Ltd, Yokohama-shi, Kanagawa 221-0023 (JP)
(72) Inventor: TOYOTA, Ryohey, Atsugi-shi Kanagawa 243-0123 (JP); TSUKIZAKI, Atsushi, Atsugi-shi Kanagawa 243-0123 (JP); HIBI, Toshifumi, Atsugi-shi Kanagawa 243-0123 (JP); KANEKO, Yutaka, Atsugi-shi Kanagawa 243-0123 (JP)
(74) Representative: Osha Liang
(86) International application number: PCT/JP2013/085102
(87) International publication number: WO 2014/141569

(57) **Abstract**

Provided is a control device for an automatic transmission that can quickly respond to a new shift request for connecting an engaging clutch during shifting process to release the engaging clutch. The control device is provided with: an automatic transmission (3) having an engaging clutch (83) as shift element, and a shift controller (21) which controls shifting of the automatic transmission (3), wherein, when a downshift request for engaging the engaging clutch (83) is generated before determination of complete release of the engaging clutch (83) during upshift control for releasing the engaging clutch (83) in response to an upshift request, the downshift control in response to the downshift request is executed.

## Description

### TECHNICAL FIELD

The present invention relates to an automatic transmission control device equipped with an automatic transmission having an engaging clutch and a shift controller to perform a shift control of the automatic transmission.

### BACKGROUND

Conventionally, a stepped automatic transmission provided with, as the shift element, a dog clutch engaged at low speed stage and a friction clutch engaged at high speed stage is known in which a control device performs a shift control by switching clutches between the dog clutch and the friction clutch (for example, see Patent Document 1).

### PRIOR ART LITERATURE

### PATENT DOCUMENT

Patent Document: JP 2010-202124 A

### SUMMARY OF THE INVENTION

### PROBLEM TO BE SOLVED BY THE INVENTION

Incidentally, in the conventional control device for the automatic transmission, during a shift control for releasing the dog clutch, that is, during the shift control from low gear speed to high gear speed, a situation may arise in which a new shift request is generated to connect or engage the dog clutch in response to increase in the required driving force from the driver and the like. In this case, if the shift control to the high speed gear stage to release the dog clutch is continued and the shift control to the low speed gear stage to connect the dog clutch is subsequently performed, a problem arises that it is impossible to quickly respond to a newly generated shift request to the low speed stage.

The present invention has been made in consideration of the above problems, and, aims to provide a control device for an automatic transmission in which, a new shift request to connect the engaging clutch can be quickly responded.

### MECHANISM FOR SOLVING THE PROBLEM

In order to achieve the above object, in a control device for an automatic transmission according to the present invention, an automatic transmission having an engaging clutch as shift element is provided in the drive system of the vehicle. Further, a shift controller for performing a shift control of the automatic transmission is provided.

In addition, during a shift control to release the engaging clutch in response to a first shift request and before determination of complete release of the engaging clutch, when receiving a second shift request to engage the engaging clutch, the shift controller will execute the shift control in response to the second request.

### EFFECT OF THE INVENTION

According to the present invention, during a shift control to release the engaging clutch in response to a first shift request and before determining a complete release of the engaging clutch, when a second shift request to engage the engaging clutch is generated, the shift controller will execute the shift control in response to the second shift request.

In other words, prior to determination of the complete release of the engaging clutch, the shift control in response to the first shift request is interrupted and the second shift request to connect or engage the engaging clutch will be executed. Thus, it is possible to respond quickly to the second shift request which has been generated after the first shift request.

Consequently, it is possible to quickly respond to a new shift request to engage or connect the engaging clutch which is generated during a shift control to release the engaging clutch.

### BRIEF DESCRIPTION OF DRAWINGS

FIG. 1 is an overall system block diagram showing a driving system configuration and a control system configuration of an electric vehicle (an example of an electrically driven vehicle) to which the shift control device of a first embodiment is applied;
FIG. 2 is a control block diagram showing a detailed configuration of a shift control system of the first embodiment;
FIG. 3A is an explanatory view showing an essential part cross section of the engaging clutch of the first embodiment;
FIG. 3B is an explanatory view of the first embodiment showing the operation of the engaging clutch in the rotation synchronization initial state of the engaging initial stage;
FIG. 3C is an explanatory view of the first embodiment showing the operation of the engaging clutch in the middle of the rotation synchronization;
FIG. 3D is an explanatory view of the first embodiment showing the operation of the engaging clutch at the end of the rotation synchronization;
FIG. 4 is a flowchart showing a flow of shift control process executed by a shift controller in the first embodiment;
FIG. 5 is a shift map diagram showing an example of the upshift line and a downshift line of the automatic transmission used in the shift controller in the first embodiment;
FIG. 6 is a time chart in the control device of the first embodiment showing each characteristic including an output rotation speed of the automatic transmission, an output torque of the automatic transmission, a motor rotation speed, a motor torque, a transmission torque of an engaging clutch, a transmission torque of a friction clutch, a sleeve position of the engaging clutch, a slider position of the friction clutch, respectively, in which, despite a second to first (2→1) shift request being generated during a first to second shift control, the 1→2 shift control is continued;
FIG. 7 is a time chart in the control device of the first embodiment showing each characteristic including an output rotation speed of the automatic transmission, an output torque of the automatic transmission, a motor rotation speed, a motor torque, a transmission torque of an engaging clutch, a transmission torque of a friction clutch, a sleeve position of the engaging clutch, a slider position of the friction clutch, respectively, in which, in response to a second to first (2→1) shift request being generated during a first to second shift control, the 2→1 shift control is executed;
FIG. 8 is a flowchart showing a flow of shift control process executed by a shift controller in a second embodiment;
FIG. 9 is a time chart in the control device of a third embodiment showing each characteristic including an output rotation speed of the automatic transmission, an output torque of the automatic transmission, a motor rotation speed, a motor torque, a transmission torque of an engaging clutch, a transmission torque of a friction clutch, a sleeve position of the engaging clutch, a slider position of the friction clutch, respectively, in which, despite a second to first (2→1) shift request being generated during a first to second shift control, the 1→2 shift control is continued; and
FIG. 10 is an example of the driving system configuration of a hybrid vehicle (another example of the vehicle) to which the control device according to the present invention is applicable.

### EMBODIMENT FOR IMPLEMENTING THE INVENTION

Below, a description is given of embodiments for implementing a control device of an automatic transmission according to the present invention with reference to a first to third embodiments shown in the accompanying drawings.

### FIRST EMBODIMENT

### First, description is made of the configuration.

The configuration of a shift control device mounted in an electric vehicle (an example of an electrically driven vehicle) in the first embodiment is described in "the overall system configuration", "detailed configuration of a shift control system" and "transmission control processing configuration", separately.

### [OVERALL SYSTEM CONFIGURATION]

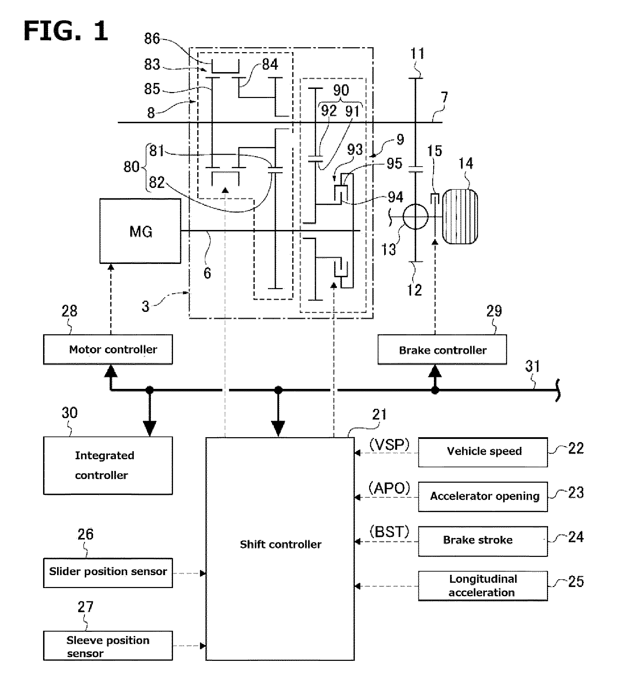

FIG. 1 shows a driving system configuration and a control system configuration of an electric vehicle to which the shift control device in the first embodiment is applied. Below, with reference to FIG. 1, the overall system configuration is described.

As the driving system configuration of the electric vehicle, as shown in FIG. 1, a motor generator MG, an automatic transmission 3, and a drive wheel 14 are provided.

The motor generator MG is used as a motor serving as a driving source during the power running time, and is used as a generator for regeneration. A motor shaft (output shaft) is connected to a transmission input shaft 6 of an automatic transmission 3.

The automatic transmission 3 is a constant mesh-type stepped transmission which transmits power in one of two gear pairs of different transmission or speed ratios, in which two stage shifting are performed in which a high gear stage (high speed stage) with a low speed reduction ratio and a low gear stage with high speed reduction ratio. The automatic transmission 3 is configured by a low side transmission mechanism 8 for realizing a low speed stage and a high side transmission mechanism 9 for realizing a high speed stage. Note that the transmission input shaft 6 and the transmission output shaft 7 are disposed parallel to each other.

The low-speed side transmission mechanism 8 is used for selecting a low-side transmission path and is disposed on the transmission output shaft 7. The low-side transmission mechanism 8 is made up by an engaging clutch 83 (meshing clutch) which performs a meshing engagement/release of a gear 81 with respect to the transmission output shaft 7 in order for the low speed stage gear pair 80 (gear 81, gear 82) to drivingly connect between the transmission input shaft 6 and the output shaft 7. Here, the low speed stage gear pair 80 is composed of the gear 81 rotatably supported on the transmission output shaft 7 and the gear 82 which is meshed with the gear 81 and rotates jointly with the transmission input shaft 6.

The high-side transmission mechanism 9 is intended for selecting a high-side transmission path and is arranged on the transmission input shaft 6. This high-speed side transmission mechanism 9 is made up of a friction clutch 93 which performs a frictional engagement/release of a gear 91 with respect to the transmission input shaft 6 in order for the high speed stage gear pair 90 (gear 91, gear 92) to drivingly connect between the transmission input shaft 6 and the output shaft 7. Here, the high speed stage gear pair is composed of the gear 91 rotatably supported on the transmission input shaft 6 and the gear 92 which is meshed with the gear 91 and rotates jointly with the transmission output shaft 7.

The transmission output shaft 7, with a gear 11 fixed thereto, and through a final drive gear set composed of the gear 11 and a gear 12 meshed therewith, is configured to drivingly connect the differential gear unit 13 to the transmission output shaft 7. Thus, the motor power of the motor generator MG which has reached the transmission output shaft 7 is configured to be transmitted to the left and right driving wheels 14 (only one of the drive wheels is shown in FIG. 1) via the final drive gear set (gear s11, 12) and the differential gear unit 13.

As the control system configuration of the electric vehicle, as shown in FIG. 1, a shift controller 21, a vehicle speed sensor 22, an accelerator opening sensor 23, a brake stroke sensor 24, a longitudinal acceleration sensor 25, a slider position sensor 26, a sleeve position sensor 27, and the like are provided. In addition, a motor controller 28, a brake controller 29, an integrated controller 30, and a CAN communication line 31 are provided.

The shift controller 21, when upshifting to the high-speed gear stage in the low gear stage with the engaging clutch 83 in engaged state and the friction clutch 93 released, performs a switching control to release the engaging clutch 83 and to frictionally connect the friction clutch 93. Also, when downshifting to low gear stage in a state in which the engaging clutch 83 is released and the friction clutch 93 is frictionally connected, the shift controller 21 performs a switching control to carry out meshing engagement of the engaging clutch 83 and release of the friction clutch 93. In other words, in the upshift, the engaging clutch 83 of a dog or meshing clutch becomes a released element, while, in the downshift, the engaging clutch 83 of the dog clutch becomes the connecting element.

### [Detailed configuration of the speed control system]

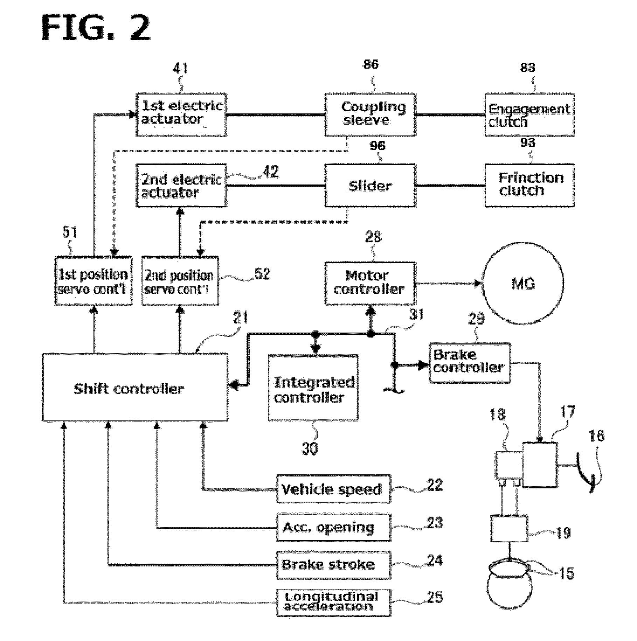

FIG. 2 shows a detailed configuration of a shift control system of the first embodiment. Below, with reference to FIG. 2, a detailed configuration of the shift control system is described.

As a configuration of the shift control system of the control system of the electric vehicle, as shown in FIG. 2, an engaging clutch 83, a friction clutch 93, a motor generator MG, a hydraulic brake 15, a shift controller 21, and an integrated controller 30 are provided. Specifically, the engaging clutch 83 and the friction clutch 93 are configured to perform a shift control based on a request from the shift controller 21. The motor generator MG and the hydraulic brake 15 are configured to cooperate to perform a regenerative brake control in accordance with a request from the integrated controller 30.

The engaging clutch 83 is a clutch of meshing engagement, synchronous type, and includes a clutch gear 84 provided on the gear 81 and a clutch hub 85 attached to the transmission output shaft 7, and a coupling sleeve 86 (See FIG. 1). Further, by driving in stroke the coupling sleeve 86 by a first electric actuator 41, meshing engagement/release is performed. Note that the coupling sleeve 86 including the first electric actuator 41 corresponds to the "actuator for the engaging clutch" in claim 1. The meshing engagement and the release of the engagement clutch 83 are determined by the position of the coupling sleeve 86. The shift controller 21 reads the value of the sleeve position sensor 27 and is provided with a first position servo controller 51 (for example, position servo system with PID control) which provides a current to the first electric actuator 41, so that the sleeve position is located in the meshing engagement position or the release position.

Further, when the coupling sleeve 86 is in meshed engagement position shown in FIG. 1, where the coupling sleeve 85 is meshed with the outer periphery clutch teeth of both clutch gear 84 and that of the clutch hub 85, the gear 81 is drivingly connected to the transmission output shaft 7. On the other hand, when the coupling sleeve 86 is in a non-meshing position (releasing position) with the outer periphery clutch teeth of one of the clutch gear 84 and the clutch hub 86, the gear 81 is released from the transmission output shaft 7.

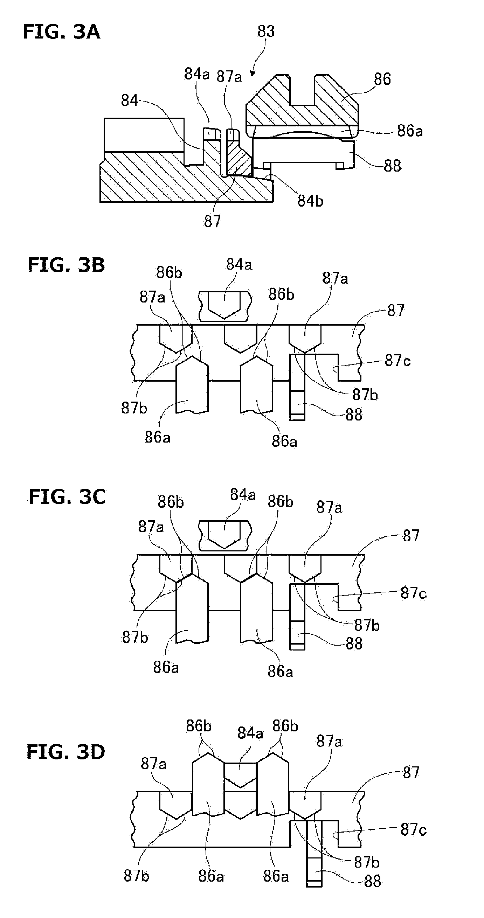

Furthermore, based on FIG. 3A to Figure 3D, a description is added of the synchronization mechanism of the engaging clutch 83. The coupling sleeve 86, while maintaining a state of meshing with a spline portion (not shown) formed on the outer periphery of the clutch hub 85 (see FIG. 1), is supported movably axially in the left-right direction in FIG. 3A. The axial movement of the coupling sleeve 86 is made by driving the first electric actuator 41 (see FIG. 2).

The clutch gear 84 is formed with a spline portion 84a at the outer periphery, which can be meshed with the spline portion 86a in the inner periphery of the coupling sleeve 86. Furthermore, a synchronizer ring 87 is mounted axially movable on a tapered cone portion 84b of the clutch gear 84.

The synchronizer ring 87 is formed with a spline portion 87a on the outer periphery, which can be engaged with the spline portion 86a of the coupling sleeve 86. and engagement possible spline portion 87a of the coupling sleeve 86 is formed. Further, the synchronizer ring 87 is configured to be movable in the rotational direction relative to the key 88 provided on the coupling sleeve 86 by the amount of clearance of the key groove 87c (see FIG. 3B, etc.).

Now, a description of the engaging clutch 83 will be given of the synchronizing operation of the synchronization mechanism with respect to the engaging clutch when changing from a released state to the engaged connection. In the engaging clutch 83, when changing to the engaged connection from the released state, the coupling sleeve 86 presses the synchronizer ring 87 in the axial direction so as to approach the clutch gear 84. As a result, due the resulting friction force between the synchronizer ring 87 and the cone portion 84b, the coupling sleeve 86 and the clutch gear 84 are connected to rotate in synchronization.

In other words, by moving the coupling sleeve 86 by the first electric actuator 41 (see FIG. 2) axially, as shown in FIG. 3A, together with the key 88, in a direction to be close to the clutch gear 84, the synchronizer ring 87 is brought into contact with the cone portion 84b.

When the synchronizer ring 87 is in contact with the cone portion 84b, because rotation is occurring between the two relative, the synchronizer ring 87 rotates only by the clearance or gap of the key groove 87c shown in FIG. 3B. Thus, a chamfer portion 87b of the spline portion 87a of the synchronizer ring 87 and a chamfer portion 86b of the spline portion 86a of the coupling sleeve 86, as shown in FIG. 3B, are brought into an index state in an axially aligned or faced to each other.

By moving the coupling sleeve 86 further to the clutch gear 84 side from the index state, as shown in FIG. 3C, both chamfer portions 87b, 86b are in contact. Thus, the synchronizer ring 87 further presses the cone portion 84b to generate the friction torque so that the synchronizer ring 87, the coupling sleeve 86, and the clutch gear 84 are synchronized.

When this rotation synchronization is established, the friction torque between the synchronizer ring 87 and the cone portion 84b disappears, and the coupling sleeve 86 is further moved in the axial direction. Thus, the spline portion 86a of the coupling sleeve 86 puts its way through, and the synchronizer ring 87, as shown in FIG. 3D, is meshed with the spline portion 84a of the clutch gear 84, so that the engaging clutch 83 is in the engaged connection state.

As described above, disposed between the gear 81 and the clutch hub 85, with the axial movement of the coupling sleeve 86, due to the friction occurring with relative movement between the input side and the output side of the engaging clutch 83, a synchronous rotation of the input side and the output side is performed by the force. In other words, the clutch gear 84, the coupling sleeve 86, and synchronizer ring 87 constitute a synchronization mechanism.

Note that, in the engaging clutch 83, when releasing from the engaged connection state, the coupling sleeve 86 is axially moved by the first electric actuator 41 (see FIG. 2) together with the key 88 in a direction separating from the clutch gear 84. In this case, the spline portion 86a of the coupling sleeve 86 will be withdrawn from the spline portion 87a of the synchronizer ring 87.

Then, when the spline portion 86a is pulled out from the spline portion 87a of the synchronizer ring 87, the clutch gear 84, the synchronizer ring 87, and the coupling sleeve 86 are resolved from the synchronized state. At the same time, the synchronizer ring 87 is rotated, and the chamfer portion 87b and the chamfer portion 86b of the coupling sleeve 86 are brought into a state of contact.

Then, when the coupling sleeve 86 is further moved in a direction away from the clutch gear 84, both chamfer portion 87b, 86b are released from the contract state. As a result, the spline portion 86a of the coupling sleeve 86 is completely separated from the synchronizer ring 87 so that the engagement clutch 83 is in the released state.

The friction clutch 93 includes a driven plate 94 which rotates together with the gear 91, and a drive plate 95 which rotates together with the transmission input shaft 6, (see FIG. 1). Further, by driving a slider 96 to impart a pressing force to both plates 94, 95 by the second electric actuator 42, the frictional engagement/release is performed.

The transmission torque capacity of the frictional clutch 93 is determined by a position of the slider 96. Also, the slider 96 is a screw mechanism, so that, when the input of the second electric actuator 42 is 0 (zero), the position is configured to be held. The shift controller 21 reads the value of the slider position sensor 26 and is provided with a second position servo controller 52 (for example, position servo system by PID control) so that a slider position for obtaining a desired transmission torque capacity may be achieved.

Further, the friction clutch 93 rotates jointly with the transmission input shaft 6, and drivingly connects the gear 91 to the transmission input shaft 6 when frictionally engaging and, when releasing, separates the drive connection between the gear 91 and the transmission input shaft 6.

The motor generator MG is controlled in a driving or regenerative mode by the motor controller 28 which receives a request output from the integrated controller 30. In other words, when the motor controller 28 receives a motor torque request, the motor generator MG is brought into a drive mode. On the other hand, when the motor controller 28 receives a regenerative torque request, the motor generator MG is put in regenerative control.

The hydraulic brake 15 gives a hydraulic braking force to the drive wheels 14 by the brake fluid being supplied via a brake pedal 16 → an electric booster 17 → a master cylinder 18 → a brake fluid pressure actuator 19. The hydraulic brake 15, during regenerative cooperative brake control, in response to the brake controller 29 inputting a brake fluid pressure command, controls the brake fluid pressure by outputting a drive command corresponding to a share of the hydraulic braking force to the electric booster 17. Here, the regenerative cooperative brake control is intended to describe the control in which the required braking force is calculated on the basis of the brake stroke amount BST from a brake stroke sensor 24 (or the required deceleration), and the calculated braking force is achieved by sharing the regenerative braking force and the hydraulic braking force. Basically, in order to increase the electricity consumption performance, the regenerative braking force is determined based on the maximum regenerative torque available at that time, and the remainder obtained by subtracting the regenerative braking force from the required braking force is borne by the hydraulic braking force.

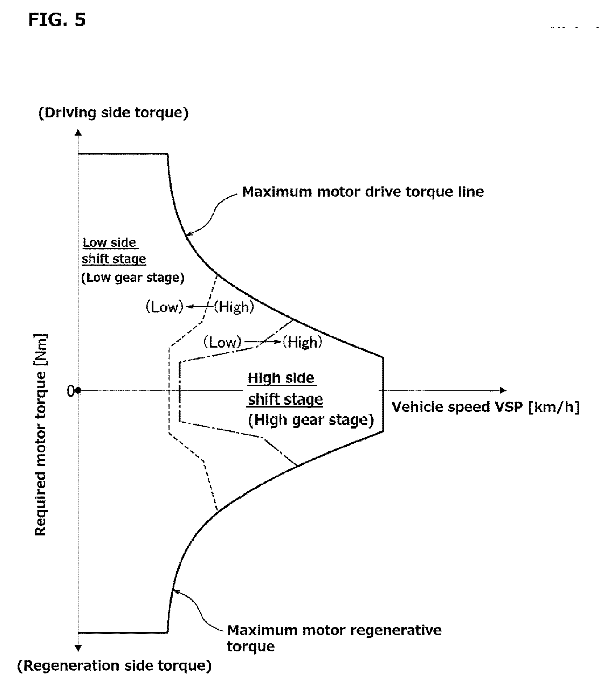

The shift controller 21 receives the information from the vehicle speed sensor 22, accelerator opening sensor 23, a brake stroke sensor 24, and a longitudinal acceleration sensor 25, etc., and controls the upshift and downshift of the automatic transmission 3 by using a shift map showing a shift line (as shown in Fig. 5, for example).

### [SHIFT CONTROL PROCESSING CONFIGURATION]

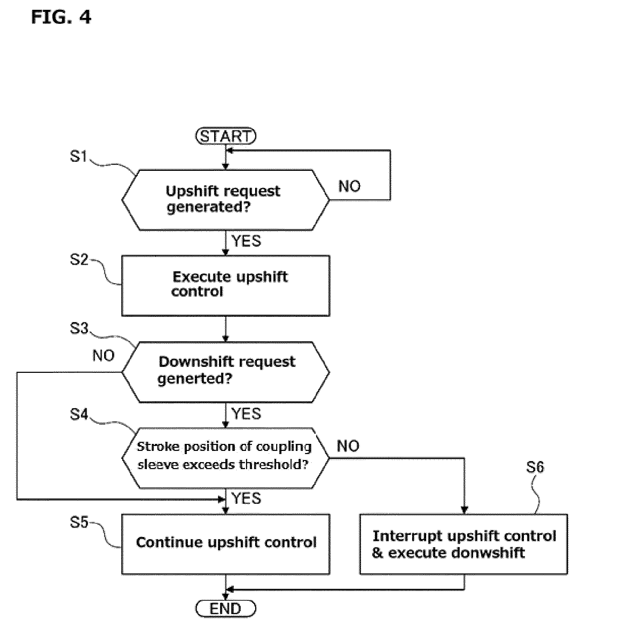

FIG. 4 shows a flow of a shift control process executed by the shift controller in the first embodiment. Below, based on FIG. 4, a description is given of each step representing a shift control processing configuration.

At step S1, it is determined whether or not an upshift request (first shift request) is generated in a state in which a low gear stage is being selected with the engaging clutch 83 being in engaged connection. If YES (upshift request present), control proceeds to step S2, while, if NO (no upshiftHere, the upshift request is generated when the operating point determined by the vehicle speed VSP and the required motor torque crosses an upshift line due to increase in vehicle speed VSP and the like in the shift map (FIG. 5) used in the shift controller 21. Note that the vehicle speed VSP is detected by the vehicle speed sensor 22. Also, the required motor torque is calculated on the basis of the accelerator opening APO detected by the accelerator opening sensor 23 or the brake stroke amount BST detected by the brake stroke sensor 24.

In step S2, following the determination that the upshift request is generated in step S1, execution of the upshift control is started, and control proceeds to step S3.

This upshift control starts a switching control to allow the engaging clutch 83 to be released from the engaged state while connecting the friction clutch 93 from the released state.

In step S3, following the determination of the start of the upshift control in step S2, it is determined whether or not a downshift request (second shift request) to the low shift stage has been generated to connect the engaging clutch 83. If YES (downshift request present), control proceeds to step S4, while, if NO (no downshift request), control proceeds to step S5.

Here, the downshift request is generated when the operating point determined by the vehicle speed VSP and the required motor torque crosses a downshift line due to depression on the accelerator pedal by the driver and the like in the shift map (FIG. 5) used in the shift controller 21.

In step S4, following the determination that the downshift request is present in step S3, at the time of the downshift request generation, it is determined whether or not the stroke positions of the coupling sleeve 86 of the engaging clutch 83 exceeds a predetermined threshold position. When YES (stroke position > threshold position), control proceeds to step S5, whereas, when NO (stroke position ≦ threshold position), control proceeds to step S6.

Here, the "threshold position" is intended to indicate a position in which complete release of the engaging clutch 83 may be confirmed. More specifically, the position in which the chamfer portion 86b of the coupling sleeve 86 and the chamfer portion 87b of the synchronizer ring 87 are in state of contact due to the coupling sleeve 86 being pulled off the synchronizer ring 87. Here the threshold position is intended to indicate the position in which both chamfer portions 86b, 87b are in contact entirely. Note that the stroke position of the coupling sleeve 86 is detected by a sleeve position detection sensor 27.

In step S5, following the determination in step S3 that no downshift request is present, or the determination in step S4 that stroke position is greater than the threshold, it is assumed that the releasing control of the engaging clutch 83 is complete, discarding the downshift request being determined for output in step S3, the upshift control started in step S2 is continuously executed, and control ends after the upshift control is finished.

Note that at the time at which the upshift control is finished, when determination can be made of that a downshift request is generated based on the position of the operating point in the shift map and the like, a downshift control is executed immediately.

In step S6, following the determination that the stroke position is equal to the threshold position or less at step S4, it is determined that the releasing control is not yet completed, the upshift control which has been started in step S2 is interrupted, and a new shift request of downshift operation of the engaging clutch 83 has not yet been started, control interrupts the upshift control which had been started at step S2 and executes a downshift control in response to the new shift request, i.e., the downshift request. After completion of the downshift control, control ends.

Now, a description is given of the operation.

The operation in the control device of the automatic transmission of the first embodiment is described in "a normal shift control operation", "an upshift continuing operation at the time of downshift request generation during upshift operation", and "a downshift executing operation at the time of downshift request generation during upshift operation", separately.

### [NORMAL SHIFT CONTROL OPERATION]

The shift controller 21 receives a vehicle speed from the vehicle speed sensor 22, an accelerator opening APO from the accelerator opening sensor 23, and a brake stroke amount BST from the brake stroke sensor 24. Further, based on the information and the shift map exemplified in FIG. 5, as described below, a shift control of the automatic transmission 3 will be performed.

In the shift map in FIG 5, a thick solid line shows the maximum motor driving torque line obtained by connecting the maximum motor driving torque value of motor generator MG for each vehicle speed, and the maximum motor regeneration torque line by connecting the maximum motor regeneration torque of the motor generator MG for each vehicle speed. The region surrounded by these lines defines the practice or operation enabling region.

Within this operation enabling region, in consideration of the speed change loss of the automatic transmission 3 and the motor loss of the motor generator MG, an upshift line shown by a dashed line (Low → High) and a down-shift line shown by a broken line (High → Low) are set respectively.

Note that the upshift line (Low → High) is set on the side of higher vehicle speed than the downshift line (High → Low) by the hysteresis amount.

Further, during the drive running state in which the accelerator pedal is being depressed, the shift controller 21 determines the operating point based on a required motor driving torque obtained from the accelerator opening APO and the vehicle speed VSP.

On the other hand, during braking operation in which the brake pedal 16 is being depressed, the operating point is determined based on the requested motor regenerative torque required by the brake stroke amount BST and the vehicle speed VSP.

When the operating point is determined, on the shift map in FIG 5, a target shift stage (low gear stage or high gear stage) appropriate for the current driving state is obtained depending on in which of the low side shift stage region and the high side shift stage region the operating point exists.

Next, when the target shift stage or gear position thus determined is in the low gear stage, the engaging clutch 83 is put in an engaged connection state to select the low gear stage with the friction clutch 3 being released. Further, when the target shift stage thus determined is in the high gear stage, a high gear stage selected stage is achieved in which the friction clutch 93 is put in the frictional connection state while the engaging clutch 83 is in the released state.

Further, during the low gear stage selected state, when the operating point within the operation enabling region crosses the upshift line (Low →High) to enter the high side shift stage region, the target shift stage is switched to the high gear stage. On the other hand, during the high gear selected state, when the operating point in the operation enabling region crosses the downshift line (High→ Low) to enter the low side shift stage region, the target shift stage will be switched over to the low gear stage.Then, in response to switching of the target shift stage, either an upshift request or a downshift request is output to execute the shift control in accordance with the shift request (i.e. upshift control or downshift control).

In the normal shift control, the upshift control for shifting the automatic transmission 3 from the low gear stage to the high gear stage is carried out by a switching shift in which the engaging clutch 83 in the engaged connection state is released while the friction clutch 93 in the released state is frictionally connected. On the other hand, the downshift control for shifting the automatic transmission 3 from the high gear stage to the low gear stage is carried out by a switching shift in which the engaging clutch 83 in the released state is engaged for connection while the friction clutch 93 in the frictionally engaged state is released.

### [UPSHIFT CONTINUING OPERATION AT THE TIME OF DOWNSHIFT REQUEST GENERATION DURING UPSHIFT OPERATION]

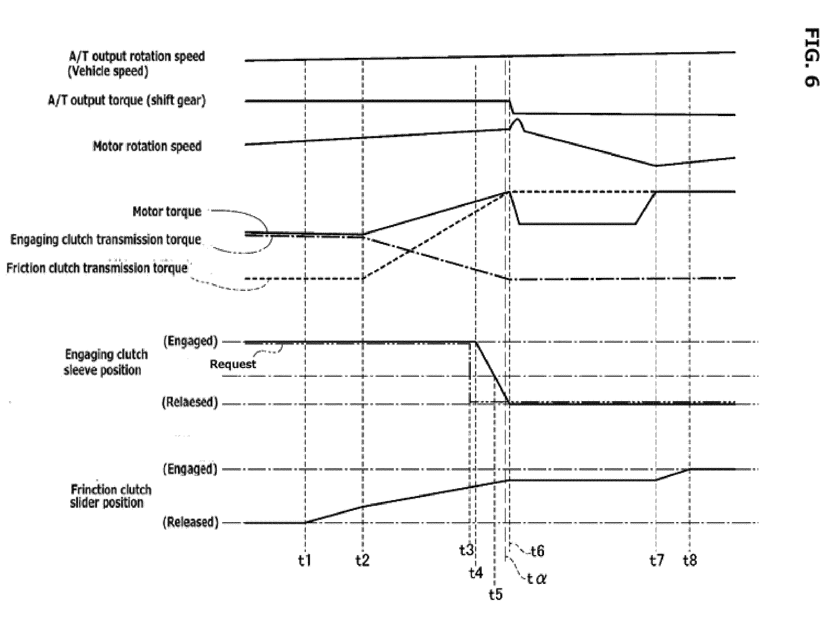

FIG. 6 is a time chart in the control device of the first embodiment showing each characteristic including an output rotation speed of the automatic transmission, an output torque of the automatic transmission, a motor rotation speed, a motor torque, a transmission torque of an engaging clutch, a transmission torque of a friction clutch, a sleeve position of the engaging clutch, a slider position of the friction clutch, respectively, in which, despite a second to first (2→1) shift request being generated during a first to second shift control, the 1→2 shift control is continue. Below, with reference to FIG. 6, a description is given of the upshift continuing operation at the time of the downshift request generation during upshift operation.

At time t1 in the time chart shown in FIG. 6, during running in the low gear stage selected state, when the operating point crosses the upshift line(Low → High) to enter the High side shift stage region, an upshift request (first request) is output. Thus, control proceeds from step S1 to step S2 in the flowchart of FIG. 4, and the upshift control is executed so that the slider 96 of the friction clutch 93 representing the engaging side element is driven by the second actuator 42 to stuff or reduce the backlash of the slider 96. In other words, the slider 96 moves gradually from the releasing position to the engaged position.

At time t2, when the slider 96 completes the backlash reduction, while the transmission torque of the friction clutch 93 starts to increase, at the same time, the motor generator MG is controlled in torque so that the motor torque representing an input torque to the automatic transmission will increase. Here, the transmission torque of the engaging clutch 83 representing a releasing side element will gradually decrease since this is the difference between the input torque (motor torque) into the automatic transmission 3 and the transmission torque of the friction clutch 93.

Then, at time t3 in the course of increasing the transmission torque of the friction clutch 93, a releasing request to release the engaging clutch 83 is output. Note that this releasing request is output from the shift controller 21 via the first position servo controller 51 to the first electric actuator 41. Also, the releasing request is obtained with the timing in mind, at which the input torque (motor torque) to the automatic transmission 3 matches the transmission torque of the friction clutch 93, and by calculating back from the time (time t5) at which the coupling sleeve 60 reaches the releasing position.

At time t4, the coupling sleeve 86 of the engaging clutch 83 starts moving from the engaged position toward the releasing position. Subsequently, at time t5, the coupling sleeve 86 reaches a threshold position which enables the determination of complete release of the engaging clutch 83, i.e., a state in which the chamfer portion 86b of the coupling sleeve 86 and the chamfer portion 87b of the synchronizer ring 87 are in state of contact entirely. Thus, the complete release of the engaging clutch 83 is determined.

Subsequently, at time tα, when the operating point crosses the downshift line (High → Low) to enter the Low side shift region, a downshift request (second shift request) is generated. However, at the time tα, it is determined that the complete release of the coupling sleeve has already been confirmed (time t5). Therefore, in the flowchart of FIG. 4, the process proceeds to step S3 → step S4 → step S5, and the upshift control is continued.

In other words, the releasing operation of the engaging clutch 83 is continued, and at the time t6, the coupling sleeve 86 reaches the releasing position so that the engaging clutch 83 is completely released. Thus, the motor torque and transmission torque of the friction clutch match each other so that the transmission torque of the engaging clutch will be zero. Subsequently, the rotation speed control of the motor generator MG is started. Note that, at this time, the slider 96 of the friction clutch 93 stops in a position in which the friction clutch 93 maintains the slip engaged state.

At time t7, when the motor rotation speed matches the target rotation speed, the slider 96 of the friction clutch 94 is driven in the engaging direction, and at time t8, when the friction clutch 93 is completely engaged, the upshift control ends and a high gear stage selected state is achieved.

As described above, in the control device of the first embodiment, during the shift or speed change control for releasing the engaging clutch 83 in response to the upshift request, after determining the complete release of the engaging clutch 83, when a downshift request to connect this engaging clutch 83, the upshift control in response to the upshift request is continued. Thus, during the upshift control, the engaging clutch 83 will be prevented from being placed in the engaged state from the state of determination of complete release so that excessive torque will be prevented from acting on the coupling sleeve 86 and the synchronizer ring 87. Therefore, it is possible to reduce the wear of the engagement clutch 83 and to prevent the durability from being impaired.

### [DOWNSHIFT EXECUTING OPERATION AT THE TIME OF DOWNSHIFT REQUEST GENERATION DURING UPSHIFT OPERATION]

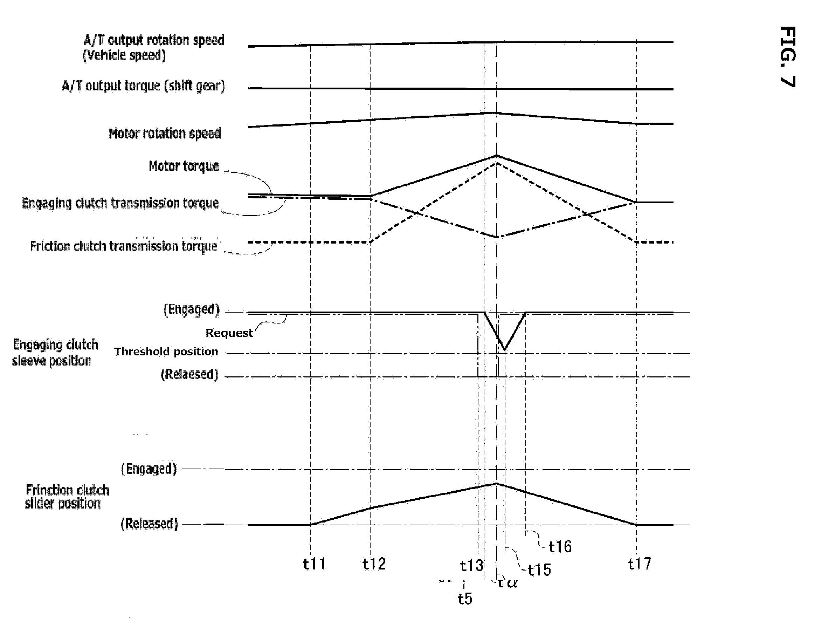

FIG. 7 is a time chart in the control device of the first embodiment showing each characteristic including an output rotation speed of the automatic transmission, an output torque of the automatic transmission, a motor rotation speed, a motor torque, a transmission torque of an engaging clutch, a transmission torque of a friction clutch, a sleeve position of the engaging clutch, a slider position of the friction clutch, respectively, in which, in response to a second to first (2→1) shift request being generated during a first to second shift control, the 2→1 shift control is executed

Below with reference to FIG. 7, a description is given of the downshift executing operation at the time of downshift request generation during upshift operation.

At time t1 in the time chart shown in FIG. 7, during running in the low gear stage selected state, when the operating point crosses the upshift line (Low → High) to enter the High side shift stage region, an upshift request (first request) is output. Thus, control proceeds from step S1 to step S2 in the flowchart of FIG. 4, and the upshift control is executed so that the slider 96 of the friction clutch 93 representing the engaging side element is driven by the second actuator 42 to stuff or reduce the backlash of the slider 96. In other words, the slider 96 moves gradually from the releasing position to the engaged position.

At time t12, when the slider 96 completes the backlash reduction, while the transmission torque of the friction clutch 93 starts to increase, at the same time, the motor generator MG is controlled in torque so that the motor torque representing an input torque to the automatic transmission will increase. Here, the transmission torque of the engaging clutch 83 representing a releasing side element will gradually decrease since this is the difference between the input torque (motor torque) into the automatic transmission 3 and the transmission torque of the friction clutch 93.

Then, at time t13 in the course of increasing the transmission torque of the friction clutch 93, a releasing request to release the engaging clutch 83 is output., and at time t14, the coupling sleeve 86 of the engaging clutch 83 starts to move from the engaged or connected position to a releasing position. Subsequently, at time tβ, when the operating point crosses the downshift line (High → Low) to enter the Low side shift region, a downshift request (second shift request) is generated.

Here, the time tβ represents a time before the position of the coupling sleeve 86 reaches the threshold position for determining the complete release of the engaging clutch 83. Thus, in the flowchart of FIG. 4, the process proceeds to step S3 → step S4 → step S6. Thus, the upshift control is interrupted, and the downshift control is executed. In other words, the automatic transmission 3 will return to the low gear stage selected state.

Therefore, an engaging request to connect or engage the engaging clutch 83 is output immediately after outputting a downshift request, and, at time t15, the coupling sleeve 86 of the engaging clutch 83 starts to move from the current position to the engaged position. Subsequently, in the engaging clutch 83, the coupling sleeve 86 reaches the connected position to become a fully connection state.

On the other hand, the slider 96 of the friction clutch 93 starts to move toward the releasing position from the point in time tβ in which the downshift request is generated, and the transmission torque of the friction clutch 9 starts to decrease. Also, the motor generator MG is controlled in torque, so that the motor torque representing the input torque to the automatic transmission 3 is reduced. Note that the transmission torque of the engaging clutch 83 is represented by the difference between the input torque to the automatic transmission 3 (motor torque) and the transmission torque of the friction clutch 93 and thus will increase gradually.

Then, at time t17, when the slider 96 of the friction clutch 93 reaches the releasing position, the transmission torque of the friction clutch is zero, and the motor torque and the transmission torque of the engaging clutch 83 match in the respective transmission torque. Thus, the downshift control ends, and the low gear stage selected state is achieved.

Thus, in the control device of the first embodiment, during the speed change or shift control for releasing the engaging 83 in response to an upshift request, when a downshift request to engage or connect this engaging clutch 83 is generated prior to determining the complete release of the engaging clutch 83,the upshift control is cancelled to execute the downshift control in response to the downshift request. Therefore, even in the middle of the upshift control, it is possible to return immediately to a state selecting the low gear stage without releasing the engaging clutch 83 to thereby quickly respond to the downshift request and meet the newly generated shift request. Also, the releasing operation of the engaging clutch 83 is not completed, and the engaged connection state will be maintained. Therefore, it is possible to prevent excessive torque being acting against the engaging clutch 83 and reduce the wear of the engaging clutch 83 to thereby prevent the durability from being impaired.

Moreover, in the control device of the first embodiment, when the coupling sleeve 86 reaches the threshold position in which the complete release of the engaging clutch may be determined, i.e., a state in which the chamfer portion 86b of the coupling sleeve 86 and the chamfer portion 87b of the synchronizer ring 87 are in contact entirely, the complete release of the engaging clutch 83 will be determined.

That it, in the first embodiment, the complete release of the engaging clutch 83 is confirmed when the coupling sleeve 86 has exceeded a predetermined threshold position.

Therefore, even if the pressing force of the first electric actuator 41 with which to move the coupling sleeve is unknown, it is possible to determine the complete release of the engaging clutch 83 accurately.

Now, a description is given of the effects. In the control device for an automatic transmission of the first embodiment, the following effects may be obtained.

(1) In a control device for an automatic transmission disposed in a vehicle driving system, the automatic transmission 3 having an engaging clutch 83 as shift element and a shift controller 21 for performing a shift control of the automatic transmission 3, wherein the shift controller 21 is configured such that, during a shift control (upshift control) to release the engaging clutch 83 in response to a first shift request (upshift request) and before determination of a complete release of the engaging clutch 83, when a second shift request (downshift request) to engage the engaging cutch 83 is generated, the shift control (downshift control) in response to the second shift request (downshift request) will be executed.

Thus, it is possible to quickly respond to a newly generated shift request (downshift request) during a shift control (upshift control) to release the engaging clutch 83. Further, after the engaging clutch 83 has completely released, it is possible to reduce wear by preventing an excessive torque from acting on the engaging clutch.

(2) The engaging clutch 83 is controlled by allowing an actuator (coupling sleeve 86) for the engaging cutch to stroke for engagement/release, wherein the shift controller 21 is configured to determine the complete release of the engaging clutch 83 when a stroke position of the actuator (coupling sleeve 86) for the engaging clutch exceeds a predetermined threshold value.

Thus, in addition to the effect of (1), it is possible to determine the complete release of the engaging clutch 83 even if the pressing force of the first electric actuator 41 with which to move the coupling sleeve 86 is not identifiable.

### [SECOND EMBODIMENT]

In a second embodiment, the determination of the complete release of the engaging clutch is made differently from that of the first embodiment.

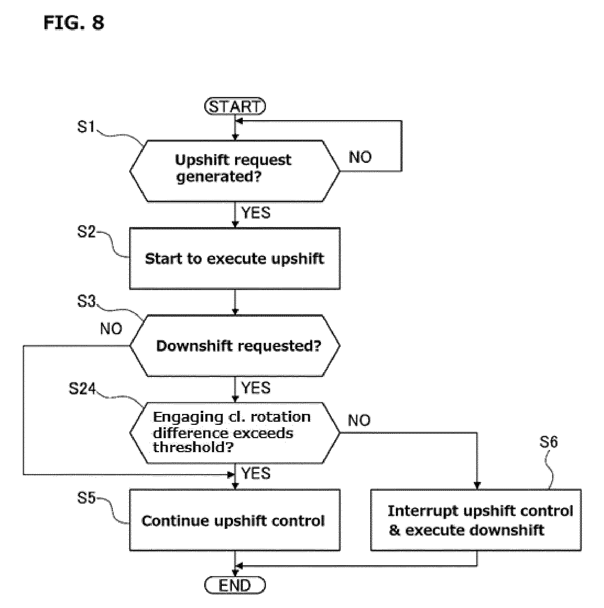

FIG. 8 is a flowchart showing a flow of shift control process executed by a shift controller in the second embodiment. Below, with reference to FIG. 8, a description is given of the control device of the automatic transmission of the second embodiment. Note that the steps similar to the first embodiment are attached with the same reference numerals and the detailed description thereof will be omitted.

In step S3 of FIG. 8, when it is determined that there is downshift request, the process proceeds to step S24. In step S24, following the determination that there is downshift request in step S3, it is determined whether or not the rotation difference across the engaging clutch 83 at the time of the downshift request generation has exceeded a predetermined threshold rotation speed. When YES (difference speed > threshold difference speed), control proceeds to step S5, whereas when NO (difference speed ≦ threshold difference speed), control proceeds to step S6. Here, "the threshold difference speed" indicates a difference of rotation speed that enables the complete release of the engaging clutch 83. More specifically, with the coupling sleeve 86 being pulled out from the synchronizer ring 87, the relative rotation between the coupling sleeve 86 and the synchronizer ring 87 is detected and identified as the threshold difference speed. Note that the difference rotation speed of the engaging clutch 83 may be obtained from the difference between the motor rotation speed representing the input rotation speed to the automatic transmission 3 and the output rotation speed of the automatic transmission.

Thus, due to determination on the complete release of the engaging clutch 83 being made based on the difference rotation speed across the engaging clutch when the difference speed has exceeded a predetermined threshold difference speed, it is possible to provide a separate sleeve position detection sensor 27 for detecting the position of the coupling sleeve 86 of the engaging clutch 83.

Now, a description is given of the effect.

In the control device of the automatic transmission in the second embodiment, it is possible to obtain the effects listed below.

(3) The shift controller 21 is configured to determine the complete release of the engaging clutch 83 when a difference rotation speed across the engaging clutch 83 exceeds a predetermined threshold value (threshold difference speed).

Thus, in addition to the effect of (1), it is possible to eliminate a sleeve position sensor 27 for detecting the position of the coupling sleeve 86 of the engaging clutch 83.

### [THIRD EMBODIMENT]

In a third embodiment, when continuing the upshift control despite a downshift request, the transmission torque of the friction clutch is configured to be different from the transmission torque of the first embodiment.

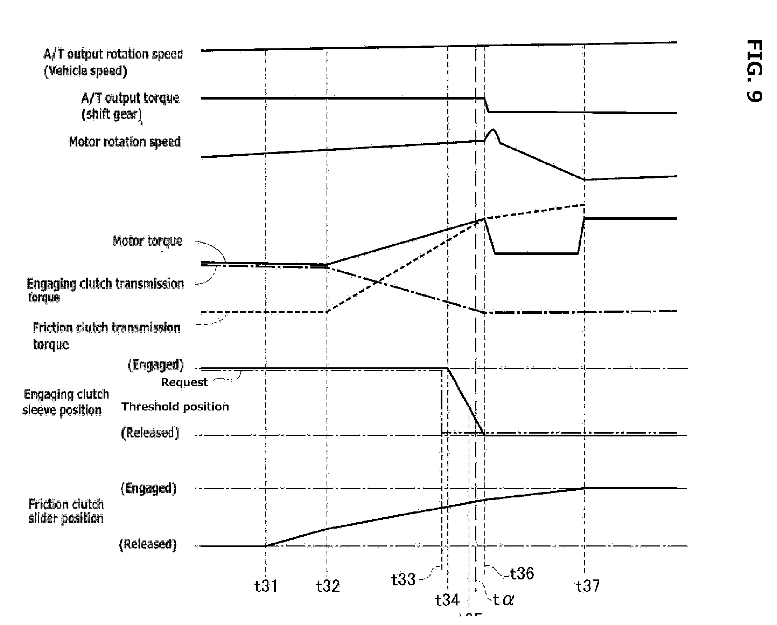

FIG. 9 is a time chart in the control device of the third embodiment showing each characteristic including an output rotation speed of the automatic transmission, an output torque of the automatic transmission, a motor rotation speed, a motor torque, a transmission torque of an engaging clutch, a transmission torque of a friction clutch, a sleeve position of the engaging clutch, a slider position of the friction clutch, respectively, in which, despite a second to first (2→1) shift request being generated during a first to second shift control, the 1→2 shift control is continued.

In the control device of the third embodiment, as shown in FIG.9, during the shift control for releasing the engaging clutch 83 in response to an upshift request, after determining the complete release of the engaging clutch 83, even when a downshift request is generated to engage or connect the engaging clutch 83, the upshift control in response to the upshift request will be continued. Moreover, the transmission torque of the friction clutch after the downshift request is made greater than the transmission torque at the time at which the downshift request has not been made.

That is, at time t31 in the time chart shown in FIG. 9, when an upshift request (first shift request) is output, the execution of the upshift control is started, and firstly the slider 96 of the friction clutch 93 representing an engaging element is driven by the second electric actuator 2 to reduce backlash of the slider 96.

At time t32, when the backlash of the slider 96 is completely reduced, the transmission torque of the friction clutch 93 starts to increase. At the same time, the motor generator is controlled in torque to increase the input torque to the automatic transmission 3. Further, the transmission torque of releasing element, i.e. engagement clutch 83 will decrease gradually.

Then, at time t33 in the course of increasing the transmission torque of the friction clutch 93, a releasing request to release or disconnect the engaging clutch 83 is output. At time t34, the coupling sleeves 86 of the engaging clutch 83 starts to move from the engaged position to the releasing position. Further, at time t35, when the coupling sleeve 86 reaches the threshold position that enables to determine the complete release of the engaging clutch 83, it is determined that the engaging clutch is completely released.

At a subsequent time tα, even when a downshift request (second shift request) is generated, since the complete release of the engaging clutch 83 has been determined at the time of tα, the upshift control is continued.

Thus, the releasing operation of the engaging clutch 83 continues, and, at time t35, the coupling sleeve 86 reaches the releasing position so that the engaging clutch 83 is fully released. Thus, the motor torque and the transmission torque of the friction torque match each other; the transmission torque of the engaging clutch 83 will be zero. Subsequently, the rotation control of the motor generator MG will be started. At this time, the slider 96 of the friction clutch 93 will stop in a position in which the friction clutch 93 maintains the slip state (see FIG. 6) as in the first embodiment, when no downshift request has been output during the shifting process.

In contrast, in the third embodiment, as shown in FIG. 9, the slider 96 of the friction clutch 93 does not stop in a position in which the friction clutch 93 maintains the slip engagement state, but continues to move to a position of complete engaged state. That is, the transmission torque of the friction clutch continues to increase after time t36, and becomes larger than the case in which the downshift request is not output in the middle of the shifting operation.

Then, at time t37, once the friction clutch 93 is completely engaged, the friction clutch transmission torque and the motor torque coincide each other and the upshift control is finished to assume a state in which the high gear stage is selected.

Thus, by setting the transmission torque of the friction clutch greater than in a case in which the downshift is not output, the time (from time t36 to time t37) from the release of the engaging clutch 83 to engagement of the friction clutch 93 will be shorter compared to the time (from t6 to time t8; see FIG. 6) from the release of the engaging clutch 83 to engagement of the friction clutch 93 where the friction clutch is completely engaged after maintaining the transmission torque of the friction clutch so that the friction clutch 93 is stopped while maintain the slip engagement state. Thus, the time from upshift request being outputted to the upshift control being ended can be reduced compared to when the downshift request during the shift control has not been generated.

Note that when the downshift request is output during the upshift control, the output of the downshift request will be expected immediately after the up-shifting control. Therefore, it is necessary for the shift-up control to be completed in a short time to thereby prepare for the subsequent shift request. Therefore, by setting the transmission torque of the friction clutch greater than the case without the downshift request being output, the shift-up control is completed in a short time so that it is advantageous with respect to the operation control of the automatic transmission 3 after completion of the upshift control.

Now, a description is given of the effects. In the control device for an automatic transmission of the third embodiment, it is possible to obtain the effects listed below.

(4) The automatic transmission 3 has the engaging clutch 83 and a friction clutch 93 for switching shift from the engaging clutch 83, wherein the shift controller 21 is configured to set the transmission torque of the friction clutch 93 in a case in which the shift control (upshift control) in response to the first shift request (upshift request) is continued despite the second shift request (downshift request) being generated greater than the transmission torque of the friction clutch 93 during the shift control (upshift control) in response to the first shift request (upshift request) without the second shift request (downshift request) being generated.

Thus, in addition to any one of the effects of (1) to (3), the upshift control may be completed in a short time, and the operation control of the automatic transmission 3 after completion of the upshift control may be performed advantageously.

As describe above, a description is given of the control device for the automatic transmission according to the present invention based on the first to third embodiments. However, the specific configurations are not limited to these embodiments. Rather, without departing the gist of inventions each pertaining to respective claim in CLAIMS, design change or addition may be acceptable.

In each embodiment described above, an example is shown in which the automatic transmission has an engaging clutch 83 and a friction clutch 93, in which two shift or speed gear stages are provided with a high gear state and a low gear stage. However, it is sufficient for the automatic transmission to have the engaging clutch only so that such an automatic transmission only with an engaging clutch as shift element or a transmission with shift stages of two or more shifting stages.

In the first embodiment, an example is shown in which the complete release of the engaging clutch 83 is determined when, in response to the coupling sleeve 86 being pulled off the synchronizer ring 87, the chamfer portion 86b of the coupling sleeve 86 and the chamfer portion 87b of the synchronizer ring 87 are in contact entirely. However, the configuration is not limited thereto. Rather, for example, the complete release of the engaging clutch 83 may be determined when, in response to the coupling sleeve 86 being pulled off the synchronizer ring 87, both chamfer portions 86b, 87b are slightly in contact. Thus, the sleeve position providing the determination criteria for complete release may be set arbitrarily.

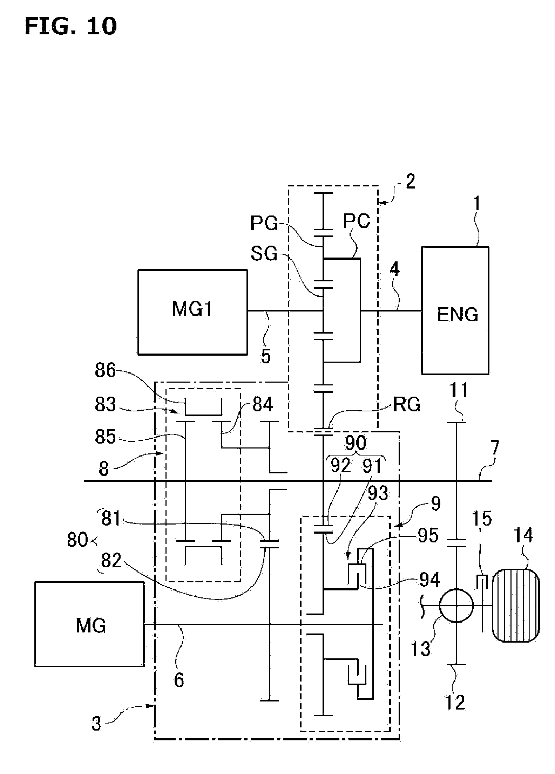

In each embodiment described above, an example is shown in which the control device for an automatic transmission according to the present invention is applied to an electric vehicle including a motor generator MG as a driving source. However, the shift control device according to the present invention may be applied to a hybrid vehicle having an engine and a motor generator as driving source. For example, as a hybrid vehicle having an engine and two motor generators as driving source, as shown in FIG. 10, the driving system of the first embodiment may be added with an engine 1, a power generating motor generator MG1, and a driving force distribution unit 2. Further, the control device according to the present invention may be applied to a normal engine driven vehicle or an electric driven vehicle such as a fuel cell vehicle.

### CROSS-REFERENCE TO RELATED APPLICATIONS

The present application claims priority based on the Japanese Patent Application No. 2013-50716, filed in Japan Patent Office on March 13, 2013, the disclosure of which is incorporated herein by reference in its entirety.

## Claims

1. A control device for an automatic transmission disposed in a vehicle driving system, the automatic transmission having an engaging clutch as a shift element and a shift controller for performing a shift control of the automatic transmission, wherein the shift controller is configured such that, during a shift control to release the engaging clutch in response to a first shift request and before determination of a complete release of the engaging clutch, when a second shift request to engage the engaging clutch is generated, the shift control in response to the second shift request will be executed.

2. The control device for an automatic transmission as claimed in claim 1, wherein the engaging clutch is controlled by allowing an actuator for the engaging clutch to stroke for engagement/release, wherein the shift controller is configured to determine the complete release of the engaging clutch when a stroke position of the actuator for the engaging clutch exceeds a predetermined threshold value.

3. The control device for an automatic transmission as claimed in claim 1, wherein the shift controller is configured to determine the complete release of the engaging clutch when a difference rotation speed across the engaging clutch exceeds a predetermined threshold value.

4. The control device for an automatic transmission as claimed in any one of claims 1 to 3, wherein the automatic transmission has the engaging clutch and a friction clutch for switching shift from the engaging clutch, wherein the shift controller is configured to set the transmission torque of the friction clutch in a case in which the shift control in response to the first shift request is continued despite the second shift request being generated greater than the transmission torque of the friction clutch during the shift control in response to the first shift request without the second shift request being generated.
